# EUROPÄISCHE PATENTSCHRIFT

(11) **EP 2 361 195 B1**
(45) Veröffentlichungstag und Bekanntmachung des Hinweises auf die Patenterteilung: **22.02.2017**
(21) Anmeldenummer: 09759946.8
(22) Anmeldetag: 25.11.2009
(51) Int. Cl.: B64C 1/06

(54) **SCHALENBAUTEIL FUER EIN LUFT- ODER RAUMFAHRZEUG**
SHELL COMPONENT FOR AEROSPACE VEHICLE
ELEMENT DE COQUE POUR AERONEF

(30) Priorität: 01.12.2008 DE 102008044229; 01.12.2008 US 118745 P
(43) Veröffentlichungstag der Anmeldung: 31.08.2011
(73) Patentinhaber: Airbus Operations GmbH, 21129 Hamburg (DE)
(72) Erfinder: TACKE, Stefan, 21614 Buxtehude (DE)
(74) Vertreter: Isarpatent
(86) Internationale Anmeldenummer: PCT/EP2009/065823
(87) Internationale Veröffentlichungsnummer: WO 2010/063627

(56) Entgegenhaltungen:
- WO-A1-2006/001859
- WO-A2-2008/067460
- FR-A1- 2 766 407
- US-A1- 2006 231 682

## Beschreibung

Die vorliegende Erfindung betrifft ein Schalenbauteil für ein Luft- oder Raumfahrzeug. Ferner betrifft die Erfindung ein Luft- oder Raumfahrzeug sowie eine Rumpfsektion eines Luft- oder Raumfahrzeugs mit einem derartigen Schalenbauteil.

Obwohl auf beliebige Leichtbaustrukturen mit einer versteiften Außenhaut anwendbar, werden die vorliegende Erfindung sowie die ihr zugrunde liegende Problematik in Bezug auf Bauteile der Rumpfschale von Flugzeugen näher erläutert.

Rumpfstrukturen werden im Flugzeugbau üblicherweise aus versteiften Hautfeldern, Spanten, Querträgern für den Fußboden eines Passagierraums sowie Querträgern oder einem Fachwerk für den Boden eines Frachtraumbereichs gefertigt. Die einzelnen Bauteile werden herkömmlicherweise aus Metall hergestellt, z.B. aus Aluminium oder einer Aluminiumlegierung, und mittels Nieten oder Bolzen verbunden. Im Falle eines vertikalen Aufpralls der Rumpftonne auf den Boden wird durch das plastisch-elastische Verhalten der Metallbauteile, die sich unter Einwirkung der Aufprallkräfte allmählich verformen, ein großer Teil der Aufprallenergie aufgebraucht und so die Sicherheit der Passagiere gewährleistet.

Bei der Fertigung tragender Rumpfstrukturen werden jedoch zunehmend Metallwerkstoffe durch Faserverbundwerkstoffe, insbesondere durch kohlenstofffaserverstärkten Kunststoff (CFK) ersetzt, da hierdurch bei gleicher Festigkeit und Steifigkeit ein geringeres Gesamtgewicht des Flugzeugs und damit ein geringerer Energieverbrauch im Flugbetrieb erzielt werden kann. Während Metallwerkstoffe sich unter Überlast allmählich plastisch verformen und dabei Energie aufnehmen, kommt es allerdings bei Faserverbundwerkstoffen, insbesondere bei CFK, zu einem plötzlichen Bruch des Materials mit sehr geringer Energieaufnahme. Dieses spröde Verhalten führt bei einem Aufprall der Rumpftonne auf den Boden dazu, dass große Teile der Struktur schlagartig versagen, ohne genügend Aufprallenergie aufgenommen zu haben.

Es ist daher Aufgabe der vorliegenden Erfindung, das Energieabsorptionsverhalten einer Flugzeugrumpfstruktur im Überlastfall bei geringem Gesamtgewicht zu verbessern, insbesondere dann, wenn die Struktur im Wesentlichen aus Faserverbundwerkstoffen hergestellt wird.

Erfindungsgemäß wird diese Aufgabe durch ein Rumpfschalenbauteil für ein Luft- oder Raumfahrzeug mit den Merkmalen des Patentanspruchs 1 gelöst, ferner auch durch eine Rumpfsektion mit den Merkmalen des Patentanspruchs 8 oder ein Luft- oder Raumfahrzeug mit den Merkmalen des Patentanspruchs 9.

Die der vorliegenden Erfindung zugrunde liegende Idee besteht darin, bei einem Rumpfschalenbauteil mit einem durch Stringer verstärkten Hautfeld und einem Spant, der einen Faserverbundwerkstoff und somit ein geringes Eigengewicht aufweist, eine Spantanbindungsstruktur mit einem duktilen Werkstoff vorzusehen, der als mit Kurzfasern einer Länge bis 5 cm verstärkter duroplastischer oder thermoplastischer Kunststoff ausgebildet ist, wobei die Spantanbindungsstruktur einerseits den Spant innerhalb eines gegebenen, die Stringer kreuzenden Längenbereichs an das Hautfeld anbindet und andererseits den Spant über diesen Längenbereich wesentlich lückenlos verstärkt.

Um den Spant an das Hautfeld anzubinden, weist die Spantanbindungsstruktur eine Vielzahl von am Hautfeld befestigten Fußabschnitten auf, die z.B. das Hautfeld jeweils in einem zwischen zwei Stringern liegenden Bereich direkt kontaktieren. Alternativ oder zusätzlich zur direkten Befestigung am Hautfeld können die Fußabschnitte auch indirekt am Hautfeld befestigt sein, z.B. indem sie an Abschnitten der Stringer befestigt sind oder zwischen dem Hautfeld und den Fußabschnitten Zwischenstücke eingefügt sind.

Die Fußabschnitte gehen jeweils einstückig in einen Schulterabschnitt über, der über einen zugehörigen Streckenabschnitt, im Folgenden auch als Befestigungsspanne bezeichnet, am Spant befestigt ist. Der Begriff bezeichnet dabei denjenigen Streckenabschnitt entlang des Spantes, der von den Befestigungspunkten zwischen dem betreffenden Schulterabschnitt und dem Spant aufgespannt wird. Es können sowohl unterschiedliche der Fußabschnitte in unterschiedliche zugehörige Schulterabschnitte mit entsprechend unterschiedlichen Befestigungsspannen übergehen, als auch unterschiedliche der Fußabschnitte in denselben, ihnen gemeinsam zugehörigen Schulterabschnitt. Dabei ergänzen sich - falls zu den Fußabschnitten mehrere Schulterabschnitte gehören - die zugehörigen Befestigungsspannen entlang des Spants wesentlich lückenlos über den Längenbereich, indem sie einander überlappen oder ohne wesentliche Lücken aneinander angrenzen. Falls zu den Fußabschnitten nur ein gemeinsamer Schulterabschnitt gehört, erstreckt sich dieser allein über den Längenbereich, d.h. über die Stringer.

Wenn im Fall einer Überlast, z.B. bei einem Aufprall eines Flugzeugrumpfs auf den Boden, der Faserverbundwerkstoff des Spants an einer beliebigen Stelle seines so wesentlich lückenlos verstärkten Längenbereichs schlagartig versagt, ermöglicht der duktile Werkstoff der Spantanbindungsstruktur an dieser Stelle, sich plastisch zu verformen und dabei Aufprallenergie abzubauen. Die Spantanbindungsstruktur erfüllt somit eine doppelte Funktion, die einerseits die Anbindung des Spants an das Hautfeld und andererseits die Energieaufnahme im Überlastfall umfasst. Dies ermöglicht, das Schalenbauteil mit verbessertem Energieabsorptionsverhalten bereitzustellen, ohne sein Gewicht durch verstärkende Zusatzbauteile zu erhöhen.

Wenn der duktile Werkstoff als ein mit Kurzfasern einer Länge von 1 bis 5 cm verstärkter thermoplastischer Kunststoff ausgebildet ist, ermöglicht dies eine besonders leichte Ausführung. Der thermoplastische Kunststoff ist faserverstärkt, um eine erhöhte Stabilität zu erzielen.

Wenn der duktile Werkstoff als ein mit Kurzfasern einer Länge von 1 bis 5 cm verstärkter duroplastischer Kunststoff ausgebildet ist, ermöglicht dies eine leichte Ausführung des Schalenbauteils bei guter Wärmestabilität. Der kurzfaserverstärkte duroplastische Kunststoff zeigt ein quasi-duktiles Verhalten, da Kurzfasern im Überlastfall aus der Kunststoffmatrix gezogen werden und dabei Energie aufnehmen können, was die Energieaufnahme im Überlastfall verbessert.

Gemäß einer bevorzugten Weiterbildung überlappen die Befestigungsspannen einander entlang des Spants. Dies erhöht die Stabilität der Verbindung zwischen Spant und Spantanbindungsstruktur.

Gemäß einer bevorzugten Weiterbildung überlappen die Schulterabschnitte einander entlang des Spants. Auf diese Weise werden benachbarte Schulterabschnitte besonders fest miteinander verbunden, sodass sie auch bei Versagen des Spants im Überlappbereich untereinander verbunden bleiben und Aufprallenergie absorbieren können.

Gemäß einer bevorzugten Weiterbildung sind mindestens zwei Schulterabschnitte mittels eines gemeinsamen Befestigungselements am Spant befestigt. Auf diese Weise ist bei gegebener Verbindungsstabilität die Zahl der notwendigen Befestigungselemente besonders gering, was das Gewicht des Schalenbauteils verringert.

Gemäß einer anderen bevorzugten Weiterbildung sind mindestens zwei Fußabschnitte einstückig mit demselben Schulterabschnitt verbunden. Hierdurch wird eine besonders hohe Festigkeit erreicht.

Gemäß einer bevorzugten Weiterbildung umfasst die Vielzahl der Stringer mindestens fünf Stringer. Dadurch kann die Spantanbindungsstruktur über einen großen Bereich duktil verformt werden, sodass das Schalenbauteil große Mengen an Aufprallenergie aufnehmen kann.

Gemäß einer bevorzugten Weiterbildung erstrecken sich die die zu den Fußabschnitten gehörigen Befestigungsspannen entlang des Spants wesentlich lückenlos über mindestens 1 m. Hierdurch kann ebenfalls die Spantanbindungsstruktur über einen großen Bereich duktil verformt werden, sodass das Schalenbauteil große Mengen an Aufprallenergie aufnehmen kann.

Gemäß einer bevorzugten Weiterbildung wird eine Rumpfsektion eines Luft- oder Raumfahrzeugs mit einem derartigen Schalenbauteil bereitgestellt. Vorzugsweise verläuft die Spantanbindungsstruktur in einer Umfangsrichtung der Rumpfsektion über einen wesentlichen Abschnitt einer unteren Halbschale der Rumpfsektion. Da bei einem Absturz aus geringer Höhe die Wahrscheinlichkeit hoch ist, dass sich der Rumpf nicht verdreht und die untere Halbschale auf den Boden trifft, kann so bei geringen Kosten die Energieabsorption bei den wahrscheinlichsten Aufprallkonstellationen verbessert werden. Beispielsweise umfasst der wesentliche Abschnitt der unteren Halbschale einen von Anbindungsstellen eines Frachtraumbodens auf beiden Seiten der Rumpfsektion begrenzten Bereich. Dieser Bereich trifft mit der höchsten Wahrscheinlichkeit bei einem Aufprall mit dem Boden zusammen.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische, ausschnitthafte Seitenansicht eines Schalenbauteils gemäß einer ersten Ausführungsform der Erfindung;
- Fig. 2: eine schematische, ausschnitthafte Seitenansicht eines Schalenbauteils gemäß einer zweiten Ausführungsform; und
- Fig. 3: eine schematische, ausschnitthafte Seitenansicht eines Schalenbauteils gemäß einer dritten Ausführungsform.

In den Figuren bezeichnen dieselben Bezugszeichen gleiche oder funktionsgleiche Komponenten, soweit nichts Gegenteiliges angegeben ist.

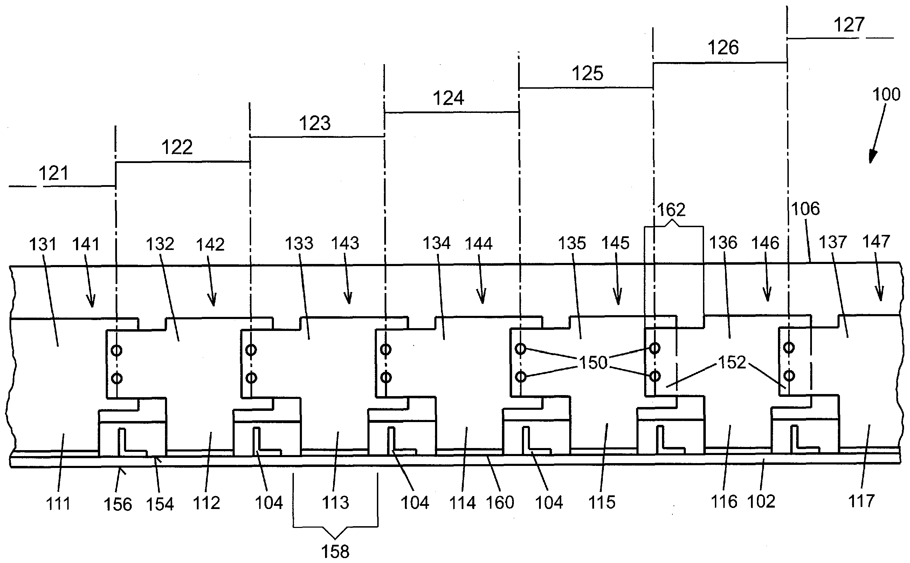

Figur 1 zeigt in einer schematischen, ausschnitthaften Seitenansicht ein Schalenbauteil 100 für einen Flugzeugrumpf. Das Schalenbauteil 100 umfasst ein Hautfeld 102 aus einem kohlenstofffaserverstärkten Kunststoff, das im eingebauten Zustand des Schalenbauteils 100 einen Abschnitt der Außenhaut des Flugzeugrumpfs bildet. An einer Innenseite 154 des Hautfelds verläuft eine Anzahl Stringer 104 in annähernd regelmäßigen Abständen parallel zueinander und senkrecht zur Zeichenebene. Die Stringer 104 bestehen ebenfalls aus kohlenstofffaserverstärktem Kunststoff, weisen hier beispielhaft ein L-Profil auf und sind mit der Innenseite 154 des Hautfelds z.B. verklebt.

Die Richtung der Stringer 104 stimmt im Wesentlichen mit der Richtung der Flugzeuglängsachse überein. Bei einem üblichen, näherungsweise zylinderförmigen Rumpf ist die Außenseite 156 des Hautfeldes 102 konvex nach außen gekrümmt, d.h. in Fig. 1 nach unten, der Einfachheit halber hier jedoch eben dargestellt.

Das Schalenbauteil 100 umfasst ferner einen Spant 106, der ebenfalls aus kohlenstofffaserverstärktem Kunststoff besteht. Betrachtet man die Innenseite 154 des Hautfelds 102 als Grundfläche, so verläuft der Spant 106 oberhalb der Stringer 104 in der Zeichenebene, d.h. quer zur Flugzeuglängsrichtung, und kreuzt die Stringer 104 ohne sie zu berühren.

Das Schalenbauteil 100 umfasst ferner eine aus einer Vielzahl von Spantanbindungssegmenten 141-147 bestehende Spantanbindungsstruktur, die den Spant 106 mit dem Hautfeld 102 verbindet und einen duktilen Werkstoff aufweist, der als mit Kurzfasern einer Länge von 1 bis 5 cm verstärkter duroplastischer oder thermoplastischer Kunststoff ausgebildet ist. Unter "duktilem Werkstoff" sind dabei Werkstoffe zu verstehen, die bei Überbelastung nicht schlagartig versagen, sondern durch plastische Verformung oder andere, quasi-duktile Vorgänge wie z.B. Herausziehen von Fasern aus einer Matrix Energie aufnehmen, bevor sie versagen. Der duktile Werkstoff ist ein kurzfaserverstärkter thermoplastischer oder duroplastischer Werkstoff wie z.B. HexMC oder ein anderes geeignetes Material.

Die Spantanbindungssegmente 141-147 sind im Wesentlichen flächenartig ausgebildet sowie in einer Ebene angeordnet, die auf dem Hautfeld 102 senkrecht steht und aus der Richtung des Betrachters von Fig. 1 gesehen unmittelbar vor dem Spant 106 parallel zu diesem verläuft, sodass er den Spant 106 berührt.

Jedes Spantanbindungssegment 141-147 weist einen entsprechenden Fußabschnitt 111-117 auf, der in einem jeweiligen, zwischen zwei benachbarten der Stringer 104 liegenden Anbindungsbereich 158 an das Hautfeld 102 angebunden ist. Beispielsweise weisen die Fußabschnitte 111-117 der Spantanbindungssegmente 141-147 jeweils einen parallel zum Hautfeld 102 abgebogenen Abschnitt 160 auf, der z.B. durch Nieten oder Verkleben an das Hautfeld 102 angebunden ist.

Von ihren jeweiligen Anbindungsbereichen 158 erstrecken sich die Spantanbindungssegmente 141-147 zum Spant 106 hin, wobei sie sich auf der Höhe des Spants 106 verbreitern und einstückig in einen jeweiligen Schulterabschnitt 131-137 übergehen. Der Schulterabschnitt 131-137 jedes Spantanbindungssegments 141-147 ist jeweils so breit ausgeführt, dass er sich entlang des Spants 106 bis über die zu beiden Seiten des jeweiligen Anbindungsbereichs 158 angeordneten Stringer 104 erstreckt und sich die Schulterabschnitte 131-137 benachbarter der Spantanbindungssegmente 141-147 in einem jeweiligen Überlappungsbereich 152 überlappen. Hierzu weist jeder Schulterabschnitt auf einer der Seiten in seiner Breitenrichtung (in Fig. 1 jeweils die vom Betrachter aus gesehen linke Seite) einen Laschenabschnitt 162 auf, dessen Höhe gegenüber dem übrigen Schulterabschnitt 131-137 verringert ist. Der Laschenabschnitt 162 weist eine Durchsetzung auf, die es ermöglicht, dass im Überlappungsabschnitt 162 der Laschenabschnitt 162 eines Spantanbindungssegments, z.B. des Spantanbindungssegments 146 auf dem Schulterabschnitt 135 des benachbarten Spantanbindungssegments 145 anliegt, während der Schulterabschnitt 136 außerhalb des Überlappungsbereichs 152 am Spant 106 anliegt.

In den Überlappungsbereichen 152 sind jeweils Befestigungselemente 150 angeordnet, die die beiden im jeweiligen Bereich 152 überlappenden Spantanbindungssegmente 141-147 und den Spant 106 miteinander verbinden. Beispielsweise sind die Befestigungselemente 150 Nieten, die jeweils in Bohrungen angeordnet sind, die beiden jeweils überlappenden der Spantanbindungssegmente 141-147 und den Spant 106 durchdringen.

Der Abstand entlang des Spants 106 zwischen den Befestigungselementen 150, mit denen jedes Spantanbindungssegment 141-147 an beiden Enden seinem Schulterabschnitt 131-137 am Spant 106 befestigt ist, definiert eine zum jeweiligen Spantanbindungssegment 141-147 bzw. dessen Fußabschnitt 111-117 gehörige Befestigungsspanne 121-127 als Streckenabschnitt entlang der Längenrichtung des Spants 106. In der vorliegenden Ausführungsform bilden die Befestigungselemente 150 jeweils gleichzeitig die linke Grenze einer der Befestigungsspannen 121-127 und die rechte Grenze einer anderen der Befestigungsspannen 121-127, sodass sich die zu benachbarten der Fußabschnitte 111-117 gehörigen Befestigungsspannen 121-127 lückenlos aneinanderreihen. Die Gesamtheit der Befestigungsspannen 121-127 erstreckt sich somit in lückenloser Reihung über die Stringer 104.

Zur Herstellung des Schalenbauteils 100 wird z.B. zunächst das durch die Vielzahl von Stringern 104 versteifte Hautfeld bereitgestellt. Anschließend wird die Spantanbindungsstruktur 141-147 mit ihren Fußabschnitten 111-117 am Hautfeld befestigt, wobei aufgrund der Segmentierung die einzelnen Spantanbindungssegmente einfach gehandhabt und eventuell vorhandene Toleranzen des Hautfelds 102 ausgeglichen werden können. Schließlich wird der Spant 106 in seiner Montageposition über den Stringern 104 angeordnet, und die Schulterabschnitte 131-137 werden über die zugehörigen Befestigungspannen 121-127 am Spant 106 befestigt, z.B. mittels gemeinsamer Befestigungselemente in Überlappungsbereichen 152 benachbarter Spantanbindungssegmente 141-147.

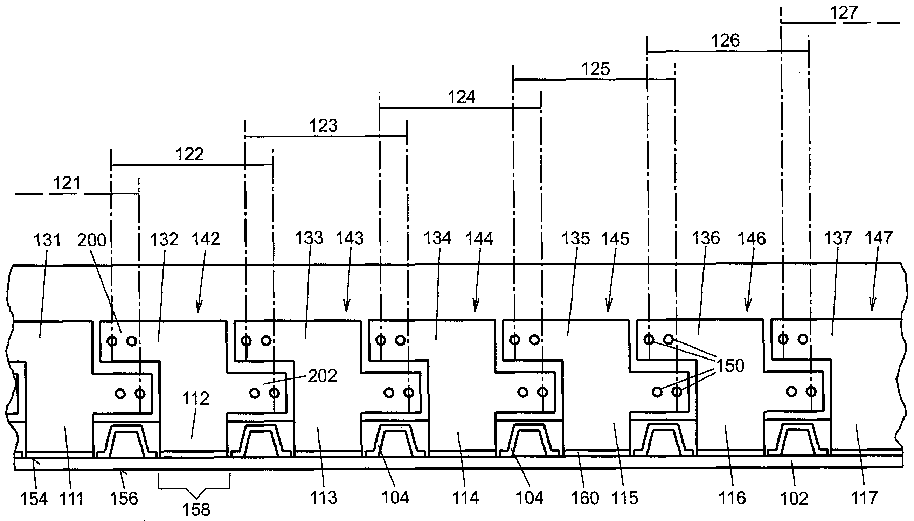

Figur 2 zeigt, ebenfalls in einer Seitenansicht, ein Schalenbauteil 100 für einen Flugzeugrumpf gemäß einer anderen Ausführungsform. An einer Innenseite 154 des Hautfelds 102 verläuft wie bei der Ausführungsform von Fig. 1 eine Anzahl Stringer 104 in annähernd regelmäßigen Abständen parallel zueinander und senkrecht zur Zeichenebene, wobei hier die Stringer 104 beispielhaft ein Ω-Profil aufweisen.

Das Schalenbauteil 100 umfasst wie die Ausführungsform von Fig. 1 eine aus einer Vielzahl von Spantanbindungssegmenten 141-147 bestehende Spantanbindungsstruktur, die einen Spant 106 mit dem Hautfeld 102 verbindet und einen Werkstoff mit duktilen bzw. quasi-duktilen Eigenschaften aufweist, der als mit Kurzfasern einer Länge von 1 bis 5 cm verstärkter duroplastischer oder thermoplastischer Kunststoff ausgebildet ist. Abweichend zu der Ausführungsform von Fig. 1 weist jedes Spantanbindungssegment 141-147 an seinem Schulterabschnitt 131-137 einen oberen Schulterfortsatz 200 und einen unteren Schulterfortsatz 202 auf, die in unterschiedlichen Höhen über der Innenfläche 154 des Hautfelds 102 entlang des Spants 106 in entgegengesetzter Richtung über die jeweils beiderseits benachbarten Stringer 104 hinweg abgestreckt sind.

Die Abmessungen und der Höhenunterschied der Laschenfortsätze 200, 202 sind dabei so gewählt, dass sich benachbarte der Spantanbindungssegmente 141-147 nicht gegenseitig berühren. Dies ermöglicht, die Spantanbindungssegmente 141-147 in einfacher, z.B. flächiger Form kostengünstig herzustellen, ohne dass Durchsetzungen o. Ä. ausgebildet werden müssen. Bei Herstellung der Spantanbindungssegmente 141-147 wie bei ihrer Montage sind die Toleranzanforderungen besonders niedrig, was weitere Kosteneinsparung ermöglicht. Es besteht jedoch eine indirekte Überlappung zwischen benachbarten der Spantanbindungssegmente 141-147 in dem Sinne, dass die Projektionen der Breitenabmessungen benachbarter der Schulterabschnitte 131-137 auf das Hautfeld 102 einander entlang des Spants 106 überlappen.

An den Laschenfortsätzen 200, 202 der Schulterabschnitte 131-137 sind jeweils Befestigungselemente 150 angeordnet, mittels der die betreffenden Schulterabschnitte 131-137 am Spant 106 befestigt sind. Beispielsweise sind die Befestigungselemente 150 Nieten, die in Bohrungen angeordnet sind, die jeweils einen der Laschenfortsätze 200, 202 und den Spant 106 durchdringen.

Der Abstand entlang des Spants 106 zwischen den am weitesten außen liegenden Befestigungselementen 150, mit denen jedes Spantanbindungssegment 141-147 an den beiden Laschenfortsätzen 200, 202 seines Schulterabschnitt 131-137 am Spant 106 befestigt ist, definiert auch in der vorliegenden Ausführungsform eine zum jeweiligen Spantanbindungssegment 141-147 bzw. dessen Fußabschnitt 111-117 gehörige Befestigungsspanne 121-127. Abweichend von der Ausführungsform von Fig. 1 überlappen sich die zu benachbarten der Fußabschnitte 111-117 gehörigen Befestigungsspannen 121-127. Die Gesamtheit der Befestigungsspannen 121-127 erstreckt sich folglich in lückenloser Reihung über die Stringer 104.

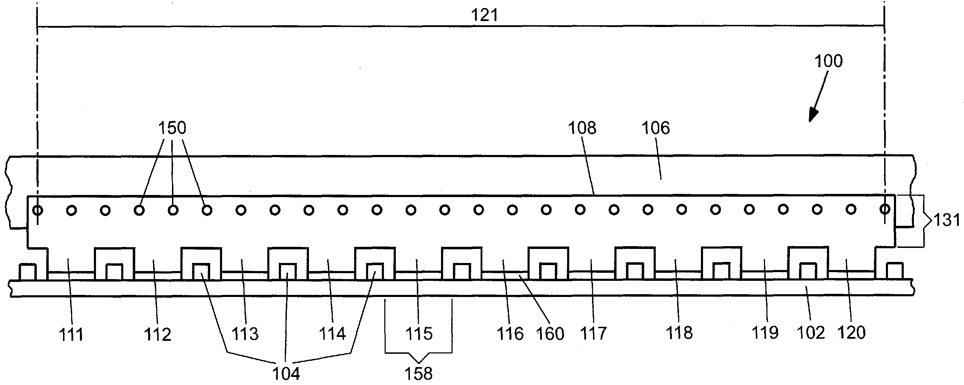

Figur 3 zeigt, ebenfalls in einer Seitenansicht, ein Schalenbauteil 100 für einen Flugzeugrumpf gemäß noch einer anderen Ausführungsform. An einer Innenseite 154 eines Hautfelds 102 verläuft wie bei den Ausführungsformen von Fig. 1 und 2 eine Anzahl Stringer 104 in annähernd regelmäßigen Abständen parallel zueinander und senkrecht zur Zeichenebene, wobei hier die Stringer 104 beispielhaft ein rechteckiges Profil aufweisen.

Das Schalenbauteil 100 umfasst wie die Ausführungsform von Fig. 1 eine Spantanbindungsstruktur 141, die einen Spant 106 mit dem Hautfeld 102 verbindet und einen Werkstoff mit duktilen bzw. quasi-duktilen Eigenschaften aufweist, der als mit Kurzfasern einer Länge von 1 bis 5 cm verstärkter duroplastischer oder thermoplastischer Kunststoff ausgebildet ist. Abweichend zu den Ausführungsformen von Fig. 1 und 2 besteht die Spantanbindungsstruktur 141 jedoch nur aus einem einzigen Segment 141, das in der Art eines Schubkamms eine Vielzahl einstückig angeformter Fußabschnitte 111-120 aufweist, die jeweils in zwischen unterschiedlichen benachbarten Paaren der Stringer 104 gelegenen Anbindungsbereichen 158 an das Hautfeld 102 angebunden sind. Umgekehrt betrachtet gehen die Fußabschnitte 111-120 einstückig in einen einzigen Schulterabschnitt 131 der Spantanbindungsstruktur 141 über, der sich entlang des Spants 106 über die Stringer 104 erstreckt und mit einer Reihe von Befestigungselementen 150 wie z.B. Nieten am Spant 106 befestigt ist. Der Abstand untereinander, in welchem die Befestigungselemente 150 angeordnet sind, ist so gewählt, dass die Spantanbindungsstruktur 141 im Bereich jedes Fußabschnitts 111-120 stabil mit dem Spant verbunden ist.

Der Abstand entlang des Spants 106 zwischen den am weitesten außen liegenden Befestigungselementen 150, mittels derer die der Schulterabschnitt 131 der einstückigen Spantanbindungsstruktur 141 am Spant 106 befestigt ist, definiert auch in der vorliegenden Ausführungsform eine Befestigungsspanne 121, die der in diesem Fall einstückigen Spantanbindungsstruktur 141 bzw. jedem einzelnen ihrer Fußabschnitte 111-120 zugeordnet ist. Die Befestigungsspanne 121 erstreckt sich lückenlos über die Stringer 104.

Eine Spantanbindungsstruktur wie anhand von Fig. 1-3 beschriebenen erstreckt sich in einem Flugzeugrumpf bzw. einer Rumpfsektion eines Flugzeugs z.B. entlang der Gesamtlänge eines Spants, d.h. ringförmig um den gesamten Umfang des Flugzeugrumpfs. Alternativ können lediglich Teilabschnitte eines Spants mit einer derartigen Spantanbindungsstruktur versehen sein, sodass Kosten und/oder zusätzliches Gewicht eingespart werden können.

Beispielsweise verläuft die Spantanbindungsstruktur in einer Umfangsrichtung der Rumpfsektion über die untere Halbschale der Rumpfsektion oder zumindest einen wesentlichen Abschnitt der unteren Halbschale, wie z.B. einen von Anbindungsstellen von Fußbodenstützstangen auf beiden Seiten der Rumpfsektion begrenzten Bereich. Auf diese Weise wird die bei unverdreht herabfallendem Rumpf die Aufprallenergie möglichst vollständig durch die Spantanbindungsstruktur absorbiert, bevor die Anbindungsstellen von Fußbodenstützstangen in Kontakt mit dem Boden kommen, um so zu vermeiden, dass die Fußbodenstützstangen sich durch den Passagierboden drücken.

Erstreckt die Spantanbindungsstruktur sich über einen Abschnitt der unteren Halbschale, der von den Anbindungsstellen eines Passagierfußbodens auf beiden Seiten der Rumpfsektion begrenzt ist, wird eine hohe Energieabsorption auch bei einem zum Aufprallzeitpunkt erheblich um seine Längsachse verdrehten Rumpf erreicht.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können unterschiedliche Abschnitte der Spantanbindungsstruktur auf unterschiedliche Weise ausgeführt werden, z.B. stückweise mit überlappenden Spantanbindungssegmenten, nicht überlappenden Spantanbindungssegmenten und/oder in einstückiger Ausführung. Zwischen Befestigungsspannen benachbarter Spantanbindungssegmente können geringfügige Lücken verbleiben, solange diese so klein sind, dass sich eine wesentlich lückenlose Verstärkung des Spants durch den duktilen Werkstoff ergibt.

### Bezugszeichenliste

- 100: Schalenbauteil
- 102: Hautfeld
- 104: Stringer
- 106: Spant
- 111-120: Fußabschnitt
- 121-127: Befestigungsspanne
- 131-137: Schulterabschnitt
- 141-147: Spantanbindungsstruktur
- 150: Befestigungselement
- 152: Überlappungsbereich
- 154: Innenfläche
- 156: Außenfläche
- 158: Anbindungsabschnitt
- 160: abgebogener Abschnitt
- 162: Laschenabschnitt
- 200: oberer Schulterfortsatz
- 202: unterer Schulterfortsatz

## Patentansprüche

1. Rumpfschalenbauteil (100) für ein Luft- oder Raumfahrzeug, mit:
einem Hautfeld (102);
einer Vielzahl von Stringern (104), welche auf dem Hautfeld (102) angeordnet sind;
einem Spant (106), welcher die Stringer (104) kreuzend über den Stringern (104) angeordnet ist; sowie
einer Spantanbindungsstruktur (141-147), welche eine Vielzahl von am Hautfeld (102) befestigten Fußabschnitten (111-120) aufweist, die jeweils einstückig in einen über einen zugehörigen Streckenabschnitt (121-127) am Spant (106) befestigten Schulterabschnitt (131-137) übergehen, wobei sich die zu den Fußabschnitten (111-120) gehörigen Streckenabschnitte (121-127) entlang des Spants (106) wesentlich lückenlos über die Stringer (104) erstrecken, **dadurch gekennzeichnet, dass** der Spant (106) einen Faserverbundwerkstoff aufweist, und die Spantanbindungsstruktur einen Werkstoff, der als mit Kurzfasern einer Länge von 1 bis 5 cm verstärkter duroplastischer oder thermoplastischer Kunststoff ausgebildet ist, aufweist.

2. Rumpfschalenbauteil nach Anspruch 1, **dadurch gekennzeichnet, dass** die Streckenabschnitte (121-127) einander entlang des Spants (106) überlappen.

3. Rumpfschalenbauteil nach Anspruch 1 oder 2, **dadurch gekennzeichnet, dass** die Schulterabschnitte (131-137) einander entlang des Spants (106) überlappen.

4. Rumpfschalenbauteil nach einem der vorhergehenden Ansprüche,
**dadurch gekennzeichnet,**
**dass** mindestens zwei Schulterabschnitte (131-137) mittels eines gemeinsamen Befestigungselements (150) am Spant (106) befestigt sind.

5. Rumpfschalenbauteil nach einem der vorhergehenden Ansprüche,
**dadurch gekennzeichnet,**
**dass** mindestens zwei Schulterabschnitte (131-137) einstückig miteinander verbunden sind.

6. Rumpfschalenbauteil nach einem der vorhergehenden Ansprüche,
**dadurch gekennzeichnet,**
**dass** die Vielzahl der Stringer (104) mindestens fünf Stringer umfasst.

7. Rumpfschalenbauteil nach einem der vorhergehenden Ansprüche,
**dadurch gekennzeichnet,**
**dass** die zu den Fußabschnitten (111-120) gehörigen Streckenabschnitte (121-127) sich entlang des Spants (106) wesentlich lückenlos über mindestens 1 m erstrecken.

8. Rumpfsektion eines Luft- oder Raumfahrzeugs mit einem Rumpfschalenbauteil (100) nach einem der vorhergehenden Ansprüche, wobei insbesondere die Spantanbindungsstruktur (141-147) in einer Umfangsrichtung der Rumpfsektion über einen wesentlichen Abschnitt einer unteren Halbschale der Rumpfsektion verläuft.

9. Luft- oder Raumfahrzeug mit einem Rumpfschalenbauteil (100) nach einem der Ansprüche 1 bis 7 oder einer Rumpfsektion nach Anspruch 8.

## Claims

1. Fuselage shell component (100) for an aircraft or spacecraft, with:
a fuselage panel (102);
a plurality of stringers (104) arranged on the fuselage panel (102);
a frame (106) arranged above and crossing the stringers (104); and
a frame attachment structure (141-147) having a plurality of base portions (111-120) fixed to the fuselage panel (102) and transitioning integrally into a shoulder portion (131-137) fixed to the frame (106) over an associated body portion (121-127), wherein the body portions (121-127) associated with the base portions (111-120) extend substantially continuously along the frame (106) across the stringers (104), **characterised in that** the frame (106) comprises a fibre-reinforced composite material, and the frame attachment structure is a material formed as a thermosetting or thermoplastic plastic strengthened with short fibres of 1 to 5 cm length.

2. Fuselage shell component according to claim 1, **characterised in that** the body portions (121-127) overlap each other along the frame (106).

3. Fuselage shell component according to claim 1 or claim 2, **characterised in that** the shoulder portions (131-137) overlap each other along the frame (106).

4. Fuselage shell component according to any one of the preceding claims, **characterised in that** at least two shoulder portions (131-137) are fixed to the frame (106) by means of a common fixing element (150).

5. Fuselage shell component according to any one of the preceding claims, **characterised in that** at least two shoulder portions (131-137) are integrally connected to one another.

6. Fuselage shell component according to any one of the preceding claims, **characterised in that** the plurality of stringers (104) comprises at least five stringers.

7. Fuselage shell component according to any one of the preceding claims, **characterised in that** the body portions (121-127) belonging to the base portions (111-120) extend substantially continuously for at least 1 m along the frame (106).

8. Fuselage section of an aircraft or spacecraft with a fuselage shell component (100) according to any one of the preceding claims, wherein in particular the frame attachment structure (141-147) runs in a circumferential direction along the fuselage section across a substantial portion of a lower half-shell of the fuselage section.

9. Aircraft or spacecraft with a fuselage shell component (100) according to any one of claims 1 to 7 or with a fuselage section according to claim 8.

## Revendications

1. Élément de coque de fuselage (100) pour aéronef ou véhicule spatial, comprenant :
un panneau de peau (102) ;
une pluralité de lisses (104), qui sont disposées sur le panneau de peau (102) ;
un cadre (106), qui est disposé au-dessus des lisses (104) en croisant les lisses (104) ; ainsi que une structure de liaison de cadre (141-147), qui comporte une pluralité de parties de pied (111-120) fixées au panneau de peau (102), qui évoluent respectivement d'un seul tenant en une partie d'épaulement (131-137) fixée au cadre (106) sur un tronçon (121-127) associé, les tronçons (121-127) associés aux parties de pied (111-120) s'étendant essentiellement sans lacunes le long du cadre (106) au-dessus des lisses (104), **caractérisé en ce que** le cadre (106) comporte un matériau composite renforcé par des fibres, et la structure de liaison de cadre comporte un matériau qui se présente sous la forme de matière plastique thermodurcissable ou thermoplastique renforcée de fibres broyées d'une longueur de 1 à 5 cm.

2. Élément de coque de fuselage selon la revendication 1, **caractérisé en ce que** les tronçons (121-127) se chevauchent le long du cadre (106).

3. Élément de coque de fuselage selon la revendication 1 ou 2,
**caractérisé en ce que** les parties d'épaulement (131-137) se chevauchent le long du cadre (106).

4. Élément de coque de fuselage selon l'une des revendications précédentes,
**caractérisé en ce qu'**au moins deux parties d'épaulement (131-137) sont fixées au cadre (106) au moyen d'un élément de fixation (150) commun.

5. Élément de coque de fuselage selon l'une des revendications précédentes,
**caractérisé en ce qu'**au moins deux parties d'épaulement (131-137) sont reliées ensemble d'un seul tenant.

6. Élément de coque de fuselage selon l'une des revendications précédentes,
**caractérisé en ce que** la pluralité de lisses (104) comprend au moins cinq lisses.

7. Élément de coque de fuselage selon l'une des revendications précédentes,
**caractérisé en ce que** les tronçons (121-127) associés aux parties de pied (111-120) s'étendent essentiellement sans lacunes le long du cadre (106) sur au moins 1 m.

8. Section de fuselage d'un aéronef ou véhicule spatial, comprenant un élément de coque de fuselage (100) selon l'une des revendications précédentes, dans laquelle en particulier la structure de liaison de cadre (141-147) s'étend dans une direction circonférentielle de la section de fuselage sur une partie substantielle d'une demi-coque inférieure de la section de fuselage.

9. Aéronef ou véhicule spatial comprenant un élément de coque de fuselage (100) selon l'une des revendications 1 à 7 ou une section de fuselage selon la revendication 8.
